# EUROPEAN PATENT APPLICATION

(11) **EP 2 351 791 A1**
(43) Date of publication of application: **03.08.2011**
(21) Application number: 09828855.8
(22) Date of filing: 26.11.2009
(51) Int. Cl.: C08L 51/04, C08K 5/00, C08L 25/12, C25D 5/56

(54) **RESIN COMPOSITION FOR PLATING USE AND RESIN PLATED PRODUCT**

(30) Priority: 27.11.2008 JP 2008302399
(71) Applicant: UMG ABS, Ltd., Chuo-ku Tokyo 104-6591 (JP)
(72) Inventor: SAKAI, Hiroshi, Ube-shi Yamaguchi 755-8580 (JP); YAMASHITA, Shinji, Ube-shi Yamaguchi 755-8580 (JP)
(74) Representative: Plougmann & Vingtoft A/S
(86) International application number: PCT/JP2009/006388
(87) International publication number: WO 2010/061605

(57) **Abstract**

There is provided a resin composition for plating use in which all of plating adhesion strength, moldability, impact resistance, and low coefficient of linear expansion are excellent; and a resin plated product.

The resin composition for plating use of the present invention is **characterized by** including a graft copolymer (A) formed by graft polymerizing a specific monomer component onto a rubber-like polymer (d) constituted of a conjugated diene-based rubber, and a specific copolymer (B), wherein a proportion of the rubber-like polymer (d) is 10 to 20% by mass, relative to the combined total of the graft copolymer (A) and the copolymer (B) which accounts for 100% by mass, and also 1 to 8 parts by mass of an antioxidant (C) having a melting point of 25 to 100°C is added, relative to the combined total of the graft copolymer (A) and the copolymer (B) which accounts for 100 parts by mass.

## Description

### BACKGROUND OF THE INVENTION

### Field of the Invention

The present invention relates to a resin composition for plating use which is suitable for a method to conduct a plating treatment on the resin surface without carrying out an electroless plating treatment, and also relates to a resin plated product.
Priority is claimed on Japanese Patent Application No. 2008-302399, filed November 27, 2008, the content of which is incorporated herein by reference.

Plating treatments have been conducted in many cases on the molded article prepared by molding a thermoplastic resin. Conventionally, ABS resins are mainly used as thermoplastic resins for their excellent moldability, basic physical properties and plating properties, and are widely used in the plastic plating applications.
As a method to conduct a plating treatment on a molded article (plastic) prepared by molding an ABS resin or the like, it is common to employ a method (catalyst accelerator method) in which the Pd-Sn catalyst nucleus is deposited onto the plastic surface, followed by a treatment using a dilute acidic solution, an electroless copper plating treatment or electroless nickel plating treatment, formation of a conductive coating onto the plastic surface, and finally an electroplating treatment.

However, since a plating solution used in the electroless copper plating treatment contains formalin as a reducing agent which is regarded as a carcinogenic substance, adverse effects on the workers have been pointed out as a problem. In addition, when producing a plating solution, a strong complexing agent such as EDTA has been generally used in order to solubilize copper ions in an alkaline solution. For this reason, in order to remove copper ions in the waste water treatment, treatment steps such as a filtration step, an activated carbon treatment step and an ion exchange step are needed, which leads to various problems, such as the requirement for a lot of effort.

Further, in those cases where an electroless nickel plating is conducted, hypophosphites (reducing agent) contained in the plating solution are oxidized to form phosphites, which are the subject of phosphorus control. Furthermore, the plating solution is causing a new problem of environmental pollution as high COD waste water.
Accordingly, with regard to the plastic plating technique, a direct plating method with no electroless plating step has been proposed and put into practice in response to the strong concerns over industrial safety and health problems and global environmental problems. As a specific example of direct plating methods, a Pd-Sn colloidal catalytic method has been proposed (for example, refer to Patent Documents 1 and 2).

Incidentally, an etching treatment is necessary in the plating processes such as the catalyst accelerator method or direct plating method in which an electroplating treatment is conducted following formation of a conductive coating on the plastic surface.
As an etchant used in the etching treatment, a chromic acid-sulfuric acid mixed solution composed of a mixed solution of chromium trioxide and sulfuric acid has been widely used. However, since this etchant contains hexavalent chromium, the working environment has been prone to adverse effects. Moreover, in order to treat the waste water safely, it is necessary to conduct a treatment involving neutralization and sedimentation following reduction of hexavalent chromium to trivalent chromium ions, which requires a highly complicated treatment. In addition, since a high temperature treatment is involved, problems arise, such as generation of chromic acid mist.

Due to such reasons, a development of etchant that replaces the chromic acid-sulfuric acid mixed solution has been desired, and various studies have been conducted.
In recent years, a permanganate solution has been proposed as an etchant for plastics to replace the chromic acid-sulfuric acid mixed solution (for example, refer to Patent Documents 3 to 6). A plating technique in which an etching treatment is conducted using a permanganate solution followed by a direct plating method is a plating method capable of reducing the environmental load (the environmental load-reducing plating method).

[Patent Document 1] Japanese Unexamined Patent Application, First Publication No. Hei 7-11487
[Patent Document 2] Japanese Unexamined Patent Application, First Publication No. Hei 11-61425
[Patent Document 3] Japanese Unexamined Patent Application, First Publication No. 2005-336614
[Patent Document 4] Japanese Unexamined Patent Application, First Publication No. 2007-100174
[Patent Document 5] Japanese Unexamined Patent Application, First Publication No. 2007-327131
[Patent Document 6] Japanese Unexamined Patent Application, First Publication No. 2008-31513

### DISCLOSURE OF THE INVENTION

### Problems to be Solved by the Invention

However, when the environmental load-reducing plating methods are applied to, for example, a molded article prepared by molding an ABS resin, unsatisfactory plating deposition easily occurred and development of adhesion strength tended to be poor. Especially when the methods are applied to products with complicated shapes, such as a radiator grill for automobiles, the occurrence of unsatisfactory plating deposition has been prominent. It is thought that unsatisfactory plating deposition is caused by reduction in the extensibility of electroplating, such as copper sulfate plating, due to the poor catalyst adsorption property, which is one of the direct plating properties.

Accordingly, techniques, such as the increase of rubber components in an ABS resin, have been proposed in order to improve the development of adhesion strength. However, when the amount of rubber component is increased, the linear expansion coefficient of resin increases, which readily impaired the thermal cycle property (property to develop the bulging of plating films and the cracks when a molded article following plating is used in low temperature environments and high temperature environments).

Accordingly, when adopting an environmental load-reducing plating method, a resin material having excellent plating adhesion strength, catalyst adsorption property (direct plating properties) and low coefficient of linear expansion is required.
In addition, since the products, such as a radiator grill, tend to increase in size and to have more complicated shapes in recent years, not only the aforementioned properties but also moldability (fluidity), impact resistance, and the like are also required for the resin material. However, a resin material having these properties in a good balance has not been attained.

The present invention takes the above circumstances into consideration, with an object of providing a resin composition for plating use in which all of catalyst adsorption property, plating adhesion strength, moldability, impact resistance, and low coefficient of linear expansion are excellent; and a resin plated product prepared by conducting a plating treatment on a molded article which is formed by molding the aforementioned resin composition for plating use.

### Means for Solving the Problem

The inventors of the present invention have conducted intensive and extensive studies in order to solve the above-mentioned problems. As a result, the inventors of the present invention focused on the content of aromatic vinyl compound that constitutes a copolymer compound, as well as the type and added amount of antioxidant added to the resin composition. Then, it was discovered that when a plating treatment was conducted on a molded article by an environmental load-reducing plating method, these content and added amounts greatly affect the catalyst adsorption property, plating adhesion strength, moldability, impact resistance, and low coefficient of linear expansion, which completed the present invention.

That is, a resin composition for plating use of the present invention is characterized by including:
a graft copolymer (A) formed by graft polymerizing 30 to 60 parts by mass of a monomer component (a) constituted of 60 to 80% by mass of an aromatic vinyl compound (a1), 20 to 40% by mass of a vinyl cyanide compound (a2) and 0 to 20% by mass of another monovinyl compound (a3) copolymerizable with the aforementioned aromatic vinyl compound (a1) and the vinyl cyanide compound (a2), onto 40 to 70 parts by mass of a rubber-like polymer (d) constituted of a conjugated diene-based rubber (with the proviso that the combined total of the rubber-like polymer (d) and the monomer component (a) accounts for 100 parts by mass); and
a copolymer (B) formed by copolymerizing 50 to 80% by mass of an aromatic vinyl compound (b1), 20 to 50% by mass of a vinyl cyanide compound (b2) and 0 to 20% by mass of another monovinyl compound (b3) copolymerizable with the aforementioned aromatic vinyl compound (b1) and the vinyl cyanide compound (b2),
wherein a proportion of the aforementioned rubber-like polymer (d) is 10 to 20% by mass, relative to the combined total of the aforementioned graft copolymer (A) and the copolymer (B) which accounts for 100% by mass, and also
1 to 8 parts by mass of an antioxidant (C) having a melting point of 25 to 100°C is added, relative to the combined total of the aforementioned graft copolymer (A) and the copolymer (B) which accounts for 100 parts by mass.
It is preferable that the aforementioned antioxidant (C) be at least one kind of antioxidant selected from the group consisting of hindered phenol-based antioxidants, thioether-based antioxidants, phosphorus-based antioxidants and sulfur-based antioxidants.
In addition, the resin plated product of the present invention is characterized by being produced by conducting an etching treatment on the molded article, obtained by molding the resin composition for plating use, using a permanganate solution, and then further conducting a treatment using a Pd-Sn colloidal catalyst, followed by a conversion treatment into conductors, and finally conducting an electroplating treatment, without performing an accelerator treatment or an electroless plating treatment.

### EFFECT OF THE INVENTION

The resin compositions for plating use of the present invention is excellent in terms of catalyst adsorption property, plating adhesion strength, moldability, impact resistance, and low coefficient of linear expansion. In addition, by using the resin composition for plating use of the present invention, a molded article suitable for the environmental load-reducing plating methods, in which an etching treatment is conducted using a permanganate solution and plating is carried out through a direct plating method, can be obtained.
Furthermore, the resin plated product of the present invention exhibits excellent levels of plating adhesion strength, impact resistance and thermal cycle property.

### DETAILED DESCRIPTION OF THE INVENTION

A more detailed description of the present invention is presented below.

### [Resin composition for plating use]

The resin composition for plating use of the present invention contains a graft copolymer (A), a copolymer (B) and an antioxidant (C) as essential components.

### <Graft copolymer (A)>

The graft copolymer (A) is formed by graft-polymerizing a monomer component (a) onto a rubber-like polymer (d).
The rubber-like polymer (d) is constituted of a conjugated diene-based rubber. In the present invention, the term "conjugated diene-based rubber" refers to those constituted of 50 to 100% by mass of butadiene and 50 to 0% by mass of a compound having a reactive group that is copolymerizable with the aforementioned butadiene (so that the combined total of these accounts for 100% by mass).

Examples of the conjugated diene-based rubbers include butadiene/aromatic vinyl compound rubber copolymers such as polybutadiene rubbers, butadiene/styrene rubber copolymers and butadiene/vinyl toluene rubber copolymers; butadiene/vinyl cyanide compound rubber copolymers such as butadiene/acrylonitrile rubber copolymers and butadiene/methacrylonitrile rubber copolymers; butadiene/alkyl acrylate ester rubber copolymers such as butadiene/methyl acrylate rubber copolymers, butadiene/ethyl acrylate rubber copolymers, butadiene/butyl acrylate rubber copolymers and butadiene/2-ethylhexyl acrylate rubber copolymers; and butadiene/alkyl methacrylate ester rubber copolymers such as butadiene/methyl methacrylate rubber copolymers and butadiene/ethyl methacrylate rubber copolymers. In addition, three-component rubber copolymers constituted of at least 50% by mass of butadiene units can also be used. A single type of these conjugated diene-based rubbers may be used alone, or two or more types thereof may be used in combination.

Although there are no particular limitations on the method used for producing the rubber-like polymer (d), it is preferably produced by an emulsion polymerization since the particle size can be readily controlled. Known methods can be applied to the emulsion polymerization, and various catalysts, emulsifying agents or the like can be used without particular limitation.

The graft copolymer (A) can be obtained by graft-polymerizing the monomer component (a) that constitutes the graft component onto the rubber-like polymer (d).
As a graft polymerization method, for example, known methods such as emulsion polymerization, suspension polymerization, solution polymerization and bulk polymerization can be employed. Although polymerization may be conducted by combining two or more types of these methods, emulsion polymerization is most suitable since the rubber-like polymer (d) can be readily produced by emulsion polymerization. That is, the graft copolymer (A) is obtained by adding and graft-polymerizing the monomer component (a) to the rubber-like polymer (d) obtained by emulsification polymerization.
The monomer component (a) is constituted of an aromatic vinyl compound (a1), a vinyl cyanide compound (a2) and another monovinyl compound (a3).

Examples of the aromatic vinyl compound (a1) include styrene, α-methylstyrene, vinyl toluene and t-butylstyrene. One type of these aromatic vinyl compounds may be used alone, or two or more types thereof may be used in combination. Of these, styrene is particularly preferred.
Examples of the vinyl cyanide compound (a2) include acrylonitrile and methacrylonitrile. One type of these vinyl cyanide compounds may be used alone, or two or more types thereof may be used in combination. Of these, acrylonitrile is particularly preferred.
Another monovinyl compound (a3) is a monovinyl compound copolymerizable with the aromatic vinyl compound (a1) and the vinyl cyanide compound (a2). Examples of such monovinyl compounds include alkyl methacrylate esters such as methyl methacrylate and ethyl methacrylate; and alkyl acrylate esters such as methyl acrylate, ethyl acrylate and butyl acrylate. One type of these monovinyl compounds may be used alone, or two or more types thereof may be used in combination.

As for the proportion of each of the compounds within the monomer component (a), the aromatic vinyl compound (a1) is within a range from 60 to 80% by mass, the vinyl cyanide compound (a2) is within a range from 20 to 40% by mass, and another monovinyl compound (a3) is within a range from 0 to 20% by mass, within 100% by mass of the monomer component (a). If the proportion of each of the compounds is within the above-mentioned range, the performance balance of the obtained resin composition for plating use between the moldability, the extensibility of electroplated copper and the plating adhesion strength improves.

As for the proportion of the rubber-like polymer (d) and the monomer component (a), the rubber-like polymer (d) is from 40 to 70 parts by mass and the monomer component (a) is from 30 to 60 parts by mass (with the proviso that the combined total of the rubber-like polymer (d) and the monomer component (a) accounts for 100 parts by mass). If the proportion of the rubber-like polymer (d) and the monomer component (a) is within the above-mentioned range, the obtained resin composition for plating use would exhibit excellent levels of extensibility of electroplated copper and impact resistance.

When graft-polymerizing the monomer component (a) onto the rubber-like polymer (d), there are no particular limitations on the method of addition, and the monomer component (a) may be added at once, may be added stepwise, or may be continuously added dropwise.
In the graft polymerization, known emulsifying agents, catalysts and initiators are generally used, and their types, added amounts and addition methods are not particularly limited.
The graft copolymer (A) obtained by graft polymerization is recovered in the form of a solid powder through the solidification and drying steps using an acid or a salt which is a method usually employed for recovering polymers from latexes.

### <Copolymer (B)>

The copolymer (B) is formed by copolymerizing an aromatic vinyl compound (b1), a vinyl cyanide compound (b2) and another monovinyl compound (b3).
Examples of the aromatic vinyl compound (b1) include vinyl toluenes such as styrene, α-methylstyrene and ρ-methylstyrene; halogenated styrenes such as p-chlorostyrene; ρ-t-butylstyrene, dimethylstyrene and vinyl naphthalenes. One type of these aromatic vinyl compounds may be used alone, or two or more types thereof may be used in combination. Of these, styrene and α-methylstyrene are particularly preferred.
The content of aromatic vinyl compound (b1) unit in 100% by mass of the copolymer (B) is within a range from 50 to 80% by mass. If the content of aromatic vinyl compound (b1) unit is within the above-mentioned range, the resin composition for plating use to be obtained would exhibit excellent levels of moldability, catalyst adsorption property (direct plating properties) and plating adhesion strength.

Examples of the vinyl cyanide compound (b2) include acrylonitrile and methacrylonitrile. Of these, acrylonitrile is particularly preferred.
The content of vinyl cyanide compound (b2) unit in 100% by mass of the copolymer (B) is within a range from 20 to 50% by mass. If the content of vinyl cyanide compound (b2) unit is within the above-mentioned range, the resin composition for plating use to be obtained would exhibit excellent levels of moldability and catalyst adsorption property (direct plating properties).

Another monovinyl compound (b3) is a monovinyl compound copolymerizable with the aromatic vinyl compound (b1) and the vinyl cyanide compound (b2). Examples of such monovinyl compounds include acrylate ester-based compounds, methacrylate ester-based compounds, unsaturated dicarboxylic acid anhydrides, vinylcarboxylic acid-based compounds and maleimide compounds.
Here, examples of the acrylate ester-based compounds include methyl acrylate, ethyl acrylate, propyl acrylate, butyl acrylate and cyclohexyl acrylate.
Examples of the methacrylate ester-based compounds include methyl methacrylate, ethyl methacrylate, propyl methacrylate, butyl methacrylate, phenyl methacrylate, isobornyl methacrylate, benzyl methacrylate and trichloroethyl methacrylate. Of these, methyl methacrylate is particularly preferred.
Examples of unsaturated dicarboxylic acid anhydrides include anhydrides of maleic acid, itaconic acid and citraconic acid. Of these, maleic acid anhydride is particularly preferred.
Examples of vinylcarboxylic acid-based compounds include acrylic acids and methacrylic acids. Of these, methacrylic acids are particularly preferred.
Examples of maleimide-based compounds include maleimide, N-cyclohexylmaleimide and N-phenylmaleimide. Of these, N-phenylmaleimide is particularly preferred.
One type of these monovinyl compounds may be used alone, or two or more types thereof may be used in combination.

The content of another monovinyl compound (b3) unit in 100% by mass of the copolymer (B) is within a range from 0 to 20% by mass. If the content of another monovinyl compound (b3) unit exceeds 20% by mass, intended properties of the obtained resin composition for plating use may be impaired.

The copolymer (B) is produced by adjusting the contents of the aromatic vinyl compound (b1) unit, vinyl cyanide compound (b2) unit and another monovinyl compound (b3) unit so that the combined total thereof accounts for 100% by mass.
There are no particular limitations on the method for producing the copolymer (B), and it can be produced by using a known method, for example, methods such as suspension polymerization, emulsion polymerization, solution polymerization and bulk polymerization.

In the present invention, when the combined total of the graft copolymer (A) and the copolymer (B) accounts for 100% by mass, the graft copolymer (A) and the copolymer (B) are added so that the proportion of the rubber-like polymer (d) becomes 10 to 20% by mass. If the proportion of the rubber-like polymer (d) is at least 10% by mass, the molded article obtained by molding the resin composition for plating use would exhibit excellent levels of impact resistance and plating adhesion strength. On the other hand, if the proportion of the rubber-like polymer (d) is not greater than 20% by mass, reduction in the extensibility of electroplated copper and the increase of linear expansion coefficient can be suppressed, and the occurrence of bulging of plating can be prevented.

### <Antioxidant (C)>

The antioxidant (C) used in the present invention has a melting point of 25 to 100°C. If the melting point of the antioxidant (C) is within the above-mentioned range, when conducting a plating treatment on the molded article which is obtained by molding the resin composition for plating use, an etching treatment using a permanganate solution can be effectively promoted and also the amount of catalyst adsorption of the resin composition for plating use can be improved. The melting point of the antioxidant (C) is preferably from 40 to 70°C.
Note that the melting point of the antioxidant (C) is a value measured in accordance with JIS K 7121. More specifically, a melting temperature is measured using a differential scanning calorimeter (DSC-8230 (heat flux DSC) manufactured by Rigaku Corporation) under the conditions of a heating rate of 20°C/min and a nitrogen gas flow rate of 50 mL/min, and the obtained melting peak temperature is defined as the melting point.

As the antioxidant (C) described above, it is preferable to use at least one kind of antioxidant selected from the group consisting of hindered phenol-based antioxidants, thioether-based antioxidants, phosphorus-based antioxidants and sulfur-based antioxidants.
Examples of the hindered phenol-based antioxidants include triethylene glycol-bis[3-(3-t-butyl-5-methyl-4-hydroxyphenyl)propionate], pentaerythrityl-tetrakis[3-(3,5-di-t-butyl-4-hydroxyphenyl)propionate], 1,6-hexanediol-bis[3-(3,5-di-t-butyl-4-hydroxyphenyl] propionate, octadodecyl-3-[3,5-di-t-butyl-4-hydroxyphenyl] propionate, N,N'-hexamethylenebis(3,5-di-t-butyl-4-hydroxy-hydrocinnamide, 3,5-di-t-butyl-4-hydroxy-benzylphosphonate-diethyl ester and 1,3,5-trimethyl-2,4,6-tris(3,5-di-t-butyl-4-hydroxybenzyl) benzene.

Examples ofthioether-based antioxidants include distearyl thiodipropionate, dipalmityl thiodipropionate, pentaerythritol-tetrakis-[β-dodecylmethyl-thiopropionate], didodecyl thioether, ditridecyl thioether, ditetradecyl thioether and dioctadecyl thioether.
Examples of phosphorus-based antioxidants include phosphite-based antioxidants and phosphonite-based antioxidants, and specific examples thereof include tris[nonylphenyl]phosphite, tridecyl phosphite, cyclic neopentane tetraylbis[octadecylphosphite], 4,4'-butylidenebis[3-methyl-6-tert-butylphenyl-ditridecyl phosphite], tris[2,4-di-tert-butylphenyl]phosphite, tetrakis[2,4-ditert-butylphenyl] 4,4'-biphenylene diphosphonite and 9,10-dihydro-9-oxa-10-phosphaphenanthrene-10-oxide.

Examples of the sulfur-based antioxidants include dialkyl thiodipropionates such as dilauryl-, dimyristyl-, and distearyl-thiodipropionates; and esters (for example, pentaerythritol tetralauryl thiopropionate) of polyhydric alcohols (such as glycerin, trimethylolethane, trimethylolpropane, pentaerythritol, trishydroxyethyl isocyanurate) of alkylthiopropionic acids such as butyl-, octyl-, lauryl- and stearyl thiopropionic acids. One type of these sulfur-based antioxidants may be used alone, or two or more types thereof may be used in combination.

Among the aforementioned antioxidants, hindered phenol-based antioxidants, thioether-based antioxidants and phosphorus-based antioxidants are particularly preferred. One type of these antioxidants may be used alone, or two or more types thereof may be used in combination.

The amount of antioxidant (C) added is within a range from 1 to 8 parts by mass and preferably from 2 to 5 parts by mass, relative to the combined total of the graft copolymer (A) and the copolymer (B) which accounts for 100 parts by mass. If the added amount of the antioxidant (C) is within the above-mentioned range, when conducting a plating treatment on the molded article which is obtained by molding the resin composition for plating use, the etching treatment time using a permanganate solution can be shortened than usual, and thus the productivity can be improved and the cost can be reduced. In addition, it also becomes possible to lower the etching treatment temperature down to, for example, about 55°C. As a result, decomposition of the permanganate solution serving as an etchant can be suppressed, and thus it becomes possible to use the permanganate solution for a long period of time.
If the added amount of the antioxidant (C) is less than 1 part by mass, it becomes difficult to achieve the effects of reducing the etching time and improving the plating adhesion strength, moldability and impact resistance. On the other hand, when the added amount of antioxidant (C) exceeds 8 parts by mass, the productivity, heat resistance and plating adhesion strength are easily deteriorated.
It should be noted that as long as the antioxidant (C) having a melting point of 25 to 100°C is included within the above-mentioned range, the resin composition for plating use of the present invention may include another antioxidant that has a melting point of either less than 25°C or higher than 100°C.

### <Other components>

The resin composition for plating use of the present invention may also include other thermoplastic resins and additives, with the proviso that the effects of the present invention are not impaired.
Examples of other thermoplastic resins include rubber reinforced styrene-based resins such as AS resins, acrylonitrile-styrene copolymers having a weight average molecular weight of 1,000,000 to 5,000,000, polystyrene resins, styrene-maleic anhydride copolymers, acrylonitrile-styrene-maleimide-based compound terpolymers, HIPS resins, ABS resins, ASA resins and AES resins, polycarbonate resins, nylon resins, methacrylic resins, polyvinyl chloride resins, polybutylene terephthalate resins, polyethylene terephthalate resins and polyphenylene ether resins. One type of these other thermoplastic resins may be used alone, or two or more types thereof may be blended together. In addition, the above-mentioned resin which has been modified by a compatibilizing agent, a functional group or the like, may also be added.
The content of other thermoplastic resins is preferably from 0 to 60 parts by mass when the combined total of the graft copolymer (A), the copolymer (B) and other thermoplastic resin compositions accounts for 100 parts by mass.

Examples of additives include commonly used various stabilizers, lubricants, metal soaps, ultraviolet absorbers, plasticizers, mold release agents, organosilicon compounds, antistatic agents, colorants (such as pigments and dyes), carbon fibers and glass fibers, talc and wollastonite, calcium carbonate, silica, fillers such as wood flour, flame retardants (such as halogen-based flame retardants, phosphorus-based flame retardants and antimony compounds), drip retardants, antimicrobial agents, mildewproofing agents and coupling agents. One type of these additives may be used alone, or two or more types thereof may be used in combination.

### <Method of producing resin composition for plating use>

The resin composition for plating use of the present invention is produced by a known mixing and kneading method. Examples of the mixing and kneading methods include a method of mixing the graft copolymer (A) and the copolymer (B) in the form of powders, beads or pellets, and the antioxidant (C), as well as other thermoplastic resins and additives if required, followed by melting and kneading of the obtained mixture. When conducting mixing or melting and kneading, devices such as a Henschel mixer, a Banbury mixer, an extruder and a heating roller can be used.

### <Molding method>

The resin composition for plating use of the present invention can be used as a raw material in various molding methods such as injection molding methods, extrusion molding methods, compression molding methods, vacuum molding methods and blow molding methods. Then, various molded articles can be obtained by the above-mentioned molding methods.
The molded articles obtained in this manner are most suitable for the environmental load-reducing plating methods in which an etching treatment is conducted using a permanganate solution and plating is carried out through a direct plating method.

Since the graft copolymer (A), the copolymer (B) and the antioxidant (C) are included in a specific proportion, the resin composition for plating use of the present invention described above has excellent catalyst adsorption property, plating adhesion strength, moldability, impact resistance and low coefficient of linear expansion.

### [Resin plated product]

The resin plated product of the present invention is formed by subjecting the molded article, obtained by molding the resin composition for plating use of the present invention, to a plating treatment through the environmental load-reducing plating methods.
More specifically, the resin plated products can be obtained by conducting an etching treatment on the molded article using a permanganate solution, and then further conducting a treatment using a Pd-Sn colloidal catalyst, followed by a conversion treatment into conductors without performing an accelerator treatment or electroless plating treatment, and finally conducting an electroplating treatment.

The resin plated product of the present invention can reduce the environmental load since a plating treatment is conducted on the molded article through a direct plating method without involving an electroless plating step, and also a permanganate solution is used during the etching treatment.
The resin plated product obtained in this manner exhibits excellent levels of plating adhesion strength, impact resistance and thermal cycle property since a plating treatment is conducted on the molded article which is obtained by molding the resin composition for plating use of the present invention. Moreover, the levels of chemical resistance and wear resistance are also excellent since a plating treatment is conducted.

Such resin plated products can be suitably used in numerous applications including industrial goods such as automobiles, electrical-, electronic- and machine parts, and washing parts; and sports and leisure goods.
Specific examples of automobile applications include a radiator grill, a door handle, an emblem, a lamp housing, various malls and garnish, and wheel caps.
Examples of applications of electrical appliances include various switch buttons, arm handles, door handles for refrigerators, mobile phone parts, and various housings.
Examples of washing parts include various washing handle shower heads and water outlets.
Examples of applications of sports and leisure goods include a pachinko machine, a slot machine, a clock frame, a decorative button and a cap for cosmetics.
Among these, the resin plated products are favorably used in the exterior and interior equipment of automobiles, washing parts, and the like.

### EXAMPLES

The present invention will be described below in more detail based on a series of examples, although the present invention is in no way limited by these examples. It should be noted that unless stated otherwise, the units "%" refer to "% by mass" and "parts" refer to "parts by mass".
In addition, various physical properties in the descriptions of examples were measured by the following methods.

### (Mass average particle size and particle size distribution of rubber-like polymer (d))

The mass average particle size and particle size distribution of the rubber-like polymer (d) were measured using a submicron particle size distribution measuring device ("CHDF 2000" manufactured by Matec Applied Sciences, Inc.).

### (Melt volume rate (MVR))

The melt volume rate (MVR) of the resin composition for plating use was measured in accordance with the method specified in ISO 1133, under conditions of a measurement temperature of 220°C and a load of 98 N. It should be noted that the MVR may be used as an indicator of the fluidity of the resin composition for plating use.

### (Linear expansion coefficient)

The linear expansion coefficient of the resin composition for plating use was measured in accordance with the method specified in ISO 113359-2.

### (Charpy impact strength)

The Charpy impact strength of a molded article (test piece) was measured in accordance with the method specified in ISO 179 and using a notched test piece (having a thickness of 4 mm) that had been left to stand for at least 12 hours in an atmosphere at 23°C.

### (Plating adhesion strength)

A test piece was prepared by conducting a plating treatment on a flat plate for plating (50 mm × 90 mm × 3 mm [thickness]) by the plating treatment technique (environmental load-reducing plating method 1) shown below. With respect to the obtained test piece, a plating film was peeled off in the vertical direction on a load measuring device to measure the strength thereof.
- Environmental load-reducing plating method 1
   (1) Degreasing → (2) Washing with water → (3) Etching → (4) Washing with water → (5) Neutralization → (6) Washing with water → (7) Conditioning → (8) Washing with water → (9) Predipping → (10) Conversion into catalysts → (11) Washing with water → (12) Conversion into conductors → (13) Washing with water → (14) Copper sulfate plating → (15) Washing with water → (16) Drying
- Conditions in each step
   (1) Degreasing: A degreasing treatment was conducted at 50°C for 5 minutes using the CRP Cleaner (manufactured by Okuno Chemical Industries Co., Ltd.).
   (2) Washing with water: Washing with water was conducted at 20°C. Note that the water washing in the step (4) and in the steps thereafter was conducted under the same conditions as those in the step (2).
   (3) Etching: An etching treatment was conducted using a permanganate solution as an etchant. More specifically, dipping in a mixed solution composed of 10 mL/L of CRP-MARS etchant solution A (manufactured by Okuno Chemical Industries Co., Ltd.), 250 mL/L of CRP-MARS etchant solution B (manufactured by Okuno Chemical Industries Co., Ltd.) and 270 mL/L of sulfuric acid was conducted. Dipping was conducted under any one of the conditions of 65°C × 7 minutes, 65°C × 15 minutes, and 55°C × 15 minutes.
   (5) Neutralization: Dipping in a mixed solution composed of 10 g/L of CRP-MARS neutralizer (manufactured by Okuno Chemical Industries Co., Ltd.) and 15 mL/L of 35% hydrochloric acid was conducted at 45°C for 1 minute.
   (7) Conditioning: Dipping in CRP-MARS conditioner (manufactured by Okuno Chemical Industries Co., Ltd.) was conducted at 25°C for 1 minute.
   (9) Predipping: Dipping in 100 mL/L of 35% hydrochloric acid was conducted at 25°C for 1 minute.
   (10) Conversion into catalysts: Dipping in a mixed solution (Pd-Sn colloidal catalyst) composed of 40 mL/L of CRP catalyst and 250 mL/L of 35% hydrochloric acid was conducted at 35°C for 6 minutes.
   (12) Conversion into conductors: Dipping in a mixed solution composed of 150 mL/L of CRP selector A-K (manufactured by Okuno Chemical Industries Co., Ltd.) and 200 mL/L of CRP selector B (manufactured by Okuno Chemical Industries Co., Ltd.) was conducted at 45°C for 3 minutes.
   (14) Copper sulfate plating: Dipping in copper sulfate was conducted at 20°C and a current density of 3 A/dm² for 60 minutes to form a copper plating film with a film thickness of 35 µm.
   (16) Drying: Drying was conducted at 80°C for 2 hours.

In addition, as a reference example, a test piece was prepared by conducting a plating treatment on the flat plate for plating in the same manner as in the environmental load-reducing plating method 1 with the exception that a mixed solution composed of 400 g/L of chromic acid and 200 mL/L of 98% sulfuric acid was used as an etchant instead of a permanganate solution and the dipping condition was changed to 65°C × 15 minutes in the etching step (3) in the environmental load-reducing plating method 1.
The plating adhesion strength of the test piece of Reference Example was measured.

### (Extensibility of copper sulfate plating)

A test piece was prepared by conducting a plating treatment on a flat plate for plating (100 mm × 100 mm × 3 mm [thickness]) by the environmental load-reducing plating method 1 in the same manner as in the aforementioned measurement of plating adhesion strength. However, the dipping condition in the etching step (3) was changed to 65°C × 3 minutes, and the dipping condition in the copper sulfate plating step (14) was changed to 20°C × 10 minutes.
With respect to the obtained test piece, the proportion of deposition area of the copper sulfate plating which had been deposited on the surface was evaluated based on a scale from 100% to 0% (for example, 100% indicates the deposition of copper sulfate plating throughout the entire area of the test piece; 0% indicates the complete absence of deposition of copper sulfate plating; and 50% indicates the deposition of copper sulfate plating on half of the area of the test piece).

In addition, as a Reference Example, a test piece was prepared by conducting a plating treatment on a flat plate for plating (100 mm × 100 mm × 3 mm [thickness]) in the same manner as in the environmental load-reducing plating method 1 with the exception that a mixed solution composed of 400 g/L of chromic acid and 200 mL/L of 98% sulfuric acid was used as an etchant instead of a permanganate solution and the dipping condition was changed to 65°C × 5 minutes in the etching step (3) and the dipping condition into copper sulfate in the copper sulfate plating step (14) was changed to 20°C × 10 minutes in the environmental load-reducing plating method 1.
With respect to the test piece of Reference Example, the proportion of deposition area of the copper sulfate plating which had been deposited on the surface was evaluated based on a scale from 100% to 0%.

### (Thermal cycle property and thermal shock property)

A test piece was prepared by conducting a plating treatment on a flat plate for plating (100 mm × 100 mm × 3 mm [thickness]) by the plating treatment technique (environmental load-reducing plating method 2) shown below. A test was conducted on the obtained test piece under the following thermal cycle condition and thermal shock condition to observe the occurrence of bulging of the plating film and the presence of plating cracks.
- Thermal cycle condition
   Three cycles, each consisting of keeping the test piece under the conditions in the order of (-30°C × 1 hour) → (23°C × 15 minutes) → (80°C × 1 hour) → (23°C × 1 hour), were carried out. The outer appearance of the test piece surface following these cycles was visually observed and evaluated based on the following evaluation criteria.
   A: Bulging of the plating film and plating cracks were not observed.
   B: Although bulging of the plating film was not observed, plating cracks were observed in the contact portion.
   C: Bulging of the plating film and plating cracks were observed in the contact portion.
   D: Bulging of the plating film was observed only in the vicinity of the gate.
   E: Bulging of the plating film was also observed in the region other than the vicinity of the gate.
   F: Bulging of the plating film was observed all over the surface.
- Thermal shock condition
   Three cycles, each consisting of keeping the test piece under the conditions in the order of (-30°C × 1 hour) → (80°C × 1 hour), were carried out. The outer appearance of the test piece surface following these cycles was visually observed and evaluated based on the same evaluation criteria as those adopted in the thermal cycle condition.

- Environmental load-reducing plating method 2
   (1) Degreasing → (2) Washing with water → (3) Etching → (4) Washing with water → (5) Neutralization → (6) Washing with water → (7) Conditioning → (8) Washing with water → (9) Predipping → (10) Conversion into catalysts → (11) Washing with water → (12) Conversion into conductors → (13) Washing with water → (14) Copper sulfate plating → (15) Washing with water → (16) Nickel electroplating → (17) Washing with water → (18) Chromium electroplating → (19) Washing with water → (20) Drying
- Conditions in each step
   The degreasing step (1), conditioning step (7), predipping step (9), step of conversion into catalysts (10), step of conversion into conductors (12) and drying step (20) as well as each water washing step were conducted under the same conditions as those in the environmental load-reducing plating method 1.
   (3) Etching: An etching treatment was conducted using a permanganate solution as an etchant. More specifically, dipping in a mixed solution composed of 10 mL/L of CRP-MARS etchant solution A (manufactured by Okuno Chemical Industries Co., Ltd.), 250 mL/L of CRP-MARS etchant solution B (manufactured by Okuno Chemical Industries Co., Ltd.) and 270 mL/L of sulfuric acid was conducted at 65°C for 15 minutes.
   (5) Neutralization: Dipping in a mixed solution composed of 10 g/L of CRP neutralizer (manufactured by Okuno Chemical Industries Co., Ltd.) and 15 mL/L of 35% hydrochloric acid was conducted at 45°C for 3 minutes.
   (14) Copper sulfate plating: Dipping in copper sulfate was conducted at 20°C and a current density of 3 A/dm for 20 minutes to form a copper plating film with a film thickness of 20 µm.
   (16) Nickel electroplating: Dipping in a mixed solution composed of 200 g/L of nickel sulfate, 45 g/L of nickel chloride, 45 g/L of boric acid, and a brightener was conducted at 55°C and a current density of 3 A/dm² for 15 minutes to form a nickel plating film with a film thickness of 10 µm.
   (18) Chromium electroplating: Dipping in a mixed solution composed of 200 g/L of chromic anhydride and 1.5 g/L of sulfuric acid was conducted at 45°C and a current density of 15 A/dm² for 2 minutes to form a chromium plating film with a film thickness of 0.3 µm.

In addition, as a reference example, a test piece was prepared by conducting a plating treatment on the flat plate for plating in the same manner as in the environmental load-reducing plating method 2 with the exception that a mixed solution composed of 400 g/L of chromic acid and 200 mL/L of 98% sulfuric acid was used as an etchant instead of a permanganate solution in the etching step (3) in the environmental load-reducing plating method 2.
With respect to the test piece of Reference Example, the thermal cycle property and the thermal shock property were evaluated.

### <Synthesis example 1: Production of graft copolymer (A-1)>

### (Production of rubber-like polymer (d))

Each component was charged into a 100 L autoclave in accordance with the composition indicated in Table 1, and a polymerization was conducted at 50°C for 9 hours to obtain a conjugated diene-based rubber latex having a conversion rate of 97%, a mass average particle size of 0.08 µm, and a pH of 9.0.
Separate to this, each component was charged into a 100 L autoclave in accordance with the compositions indicated in Table 2, and a polymerization was conducted at 70°C for 4 hours to obtain an acid group-containing copolymer latex for enlarging rubber particles having a conversion rate of 97%, a mass average particle size of 0.14 µm, and a pH of 9.0.
0.06 parts of sodium hydroxide was added to 100 parts (in terms of solid content) of the previously obtained conjugated diene-based rubber latex, followed by addition thereto of 4 parts (in terms of solid content) of the acid group-containing copolymer latex for enlarging rubber particles was added under stirring. The mixture was kept stirred for 30 minutes, thereby yielding latex of rubber-like polymer (d) constituted of a conjugated diene-based rubber having a mass average particle size of 0.33 µm.

**[Table 1]**

| Composition | Added amount (parts by mass) |
|---|---|
| 1,3-butadiene | 95 |
| Styrene | 5 |
| Diisopropylbenzene hydroperoxide | 0.2 |
| Potassium oleate | 1.0 |
| Disproportionated potassium re s in ate | 1.0 |
| Sodium pyrophosphate | 0.5 |
| Ferrous sulfate | 0.005 |
| Dextrose | 0.3 |
| Anhydrous sodium sulfate | 0.3 |
| Water | 200 |

**[Table 2]**

| Composition | Added amount (parts by mass) |
|---|---|
| n-butyl acrylate | 82 |
| Methacrylic acid | 18 |
| Potassium oleate | 2 |
| Dioctyl sodium sulfosuccinate | 1 |
| Cumene hydroperoxide | 0.4 |
| Sodium formaldehyde sulfoxylate | 0.3 |
| Ion exchanged water | 200 |

### (Production of graft copolymer (A-1))

Each component was charged into a reaction vessel in accordance with the composition (I) indicated in Table 3, and a polymerization initiation temperature was set to 40°C. A mixture having a composition (II) indicated in Table 3 was added dropwise over a period of 120 minutes and the resultant was then kept for 1 hour to effect a graft polymerization, thereby yielding a polymer latex. It should be noted that the amount of latex of rubber-like polymer (d) indicated in Table 3 is expressed in terms of solid content.
2 parts ofbutylated hydroxytoluene serving as an antioxidant and 0.5 parts of dilauryl thiopropionate were added to the obtained polymer latex. The resultant was solidified with a 5% aqueous sulfuric acid solution, washed, and then dried, thereby yielding a white powder of graft copolymer (A-1).

**[Table 3]**

| Composition | | | Added amount (parts by mass) |
|---|---|---|---|
| Composition (I) | Latex of rubber-like polymer (d) | | 50 |
| | Disproportionated potassium resinate | | 2 |
| | Sodium pyrophosphate | | 0.2 |
| | Ferrous sulfate | | 0.01 |
| | Dextrose | | 0.35 |
| | Water (also includes water originating from latex) | | 200 |
| Composition (II) | Monomer component (a) | Styrene (a1) | 35 |
| | | Acrylonitrile (a2) | 15 |
| | Cumene hydroperoxide | | 0.15 |
| Content ofstyrene within monomer component (a) (% by mass) | | | 70 |
| Content of acrylonitrile within monomer component (a) (% by mass) | | | 30 |

### <Synthesis example 2: Production of copolymer (B-1)>

65 parts of styrene, 35 parts of acrylonitrile, 0.15 parts of azobisisobutyronitrile, 0.60 parts of t-dodecyl mercaptan, 0.50 parts of calcium phosphate and 150 parts of distilled water, the amounts indicated in Table 4, were charged into a 100 L autoclave, and the mixture was stirred vigorously. Following confirmation of dispersion within the system, the temperature therein was raised to 75°C and a polymerization was conducted over a period of 3 hours. The temperature was then raised to 110°C and the resultant was aged for 30 minutes. After cooling, the resultant was dehydrated, washed and dried, thereby yielding a copolymer (B-1) in the form of a powder.

### <Synthesis example 3: Production of copolymer (B-2)>

A copolymer (B-2) was obtained in the same manner as in synthesis example 2 with the exception that the amounts of styrene, acrylonitrile and t-dodecyl mercaptan were changed to 75 parts, 25 parts and 0.35 parts, respectively.

### <Synthesis example 4: Production of copolymer (B-3)>

A copolymer (B-3) was obtained in the same manner as in synthesis example 2 with the exception that the amounts of styrene, acrylonitrile, t-dodecyl mercaptan and calcium phosphate were changed to 50 parts, 50 parts, 1.00 parts and 1.00 parts, respectively.

### <Synthesis example 5: Production of copolymer (B-4)>

A copolymer (B-4) was obtained in the same manner as in synthesis example 2 with the exception that the amounts of styrene, acrylonitrile and t-dodecyl mercaptan were changed to 40 parts, 60 parts and 1.2 parts, respectively.

### <Synthesis example 6: Production of copolymer (B-5)>

A copolymer (B-5) was obtained in the same manner as in synthesis example 2 with the exception that the amounts of styrene, acrylonitrile and t-dodecyl mercaptan were changed to 85 parts, 15 parts and 1.2 parts, respectively.

**[Table 4]**

| Composition | B-1 | B-2 | B-3 | B-4 | B-5 |
|---|---|---|---|---|---|
| Added amount (parts by mass) | | | | | |
| Styrene (b1) | 65 | 75 | 50 | 40 | 85 |
| Acrylonitrile (b2) | 35 | 25 | 50 | 60 | 15 |
| Azobisisobutyronitrile | 0.15 | 0.15 | 0.15 | 0.15 | 0.15 |
| t-dodecyl mercaptan | 0.60 | 0.35 | 1.00 | 1.20 | 1.20 |
| Calcium phosphate | 0.50 | 0.50 | 1.00 | 0.50 | 0.50 |
| Distilled water | 150 | 150 | 150 | 150 | 150 |
| Content of styrene units in copolymer (B) (% by mass) | 65 | 75 | 50 | 40 | 85 |
| Content of acrylonitrile units in copolymer (B) (% by mass) | 35 | 25 | 50 | 60 | 15 |

### <Antioxidant (C)>

The following materials were used as an antioxidant (C).
(C-1): Hindered phenol-based antioxidant (ADEKASTAB AO-50 manufactured by Adeka Corporation, melting point: 52°C).
(C-2): Thioether-based antioxidant (ADEKASTAB AO-412S manufactured by Adeka Corporation, melting point: 49°C).
(C-3): Phosphorus-based antioxidant (ADEKASTAB PEP-24G manufactured by Adeka Corporation, melting point: 170°C).

### [Examples 1 to 12, Comparative Examples 1 to 10, Reference Example]

Each of the graft copolymer (A-1), copolymers (B-1) to (B-5) and antioxidants (C-1) to (C-3) was mixed in the proportions indicated in Table 5, and 0.2 parts of a metal soap (calcium stearate), 0.4 parts of EBS-WAX (ethylenebisstearic acid amide) and 0.05 parts of silicone oil (viscosity: 100 cs/25°C) were further added as additives. The resultant was then mixed at a rotational frequency of 3,000 rpm for 5 minutes using a Henschel mixer to obtain a resin composition for plating use.
The MVR and linear expansion coefficient of the thus obtained resin composition for plating use were measured. The results are shown in Table 6.

Subsequently, the resin composition for plating use was charged into a twin screw extruder whose cylinder temperature was set to 230°C, and extruded and pelleted from the twin screw extruder. A molded article (test piece) for the measurement of physical properties and a flat plate for plating were molded by using a screw injection molding machine (with a cylinder temperature of 230°C and a mold temperature of 60°C).
The Charpy impact strength of the thus obtained molded article was measured. The results are shown in Table 6.
In addition, a plating treatment was conducted on the thus obtained flat plate for plating under the aforementioned conditions, and the plating adhesion strength, extensibility of copper sulfate plating, thermal cycle property and thermal shock property were evaluated. The results are shown in Table 6.

**[Table 5]**

| | Graft, copolymer (A) | Copolymer (B) | | | | | Antioxidant (C) | | | Proportion of rubber-like polymer (d) relative to the combined total of (A) and (B) which accounts for 100% by mass |
|---|---|---|---|---|---|---|---|---|---|---|
| | (A-1) | (B-1) | (B-2) | (B-3) | (B-4) | (B-5) | (C-1) | (C-2) | (C-3) | 12 |
| Ex. 1 | 24 | 76 | | | | | 1.0 | | | 12 |
| Ex. 2 | 24 | 76 | | | | | 2.5 | | | 12 |
| Ex.3 | 24 | 76 | | | | | 5.0 | | | 12 |
| Ex.4 | 24 | 76 | | | | | 8.0 | | | 12 |
| Ex.5 | 24 | 76 | | | | | | 2.5 | | 12 |
| Ex.6 | 24 | 76 | | | | | | 5.0 | | 12 |
| Ex.7 | 24 | 76 | | | | | 1.5 | 1.0 | | 12 |
| Ex.8 | 24 | 76 | | | | | 1.5 | | 1.0 | 12 |
| Ex.9 9 | 20 | 80 | | | | | 2.5 | | | 10 |
| Ex.10 | 24 | | 76 | | | | 2.5 | | | 12 |
| Ex.11 | 24 | | | 76 | | | 2.5 | | | 12 |
| Ex.12 | 40 | 60 | | | | | 2.5 | | | 20 |
| Comp. Ex.1 | 24 | 76 | | | | | | | 2.5 | 12 |
| Comp. Ex.2 | 24 | 76 | | | | | | | 5.0 | 12 |
| Comp. Ex.3 | 24 | 76 | | | | | | | | 12 |
| Comp. Ex.4 | 24 | 76 | | | | | 0.5 | | | 12 |
| Comp. Ex.5 | 24 | 76 | | | | | 10.0 | | | 12 |
| Comp. Ex.6 | 20 | 80 | | | | | | | | 10 |
| Comp. Ex.7 | 24 | | | | 76 | | 2.5 | | | 12 |
| Comp. Ex.8 | 24 | | | | | 76 | 2.5 | | | 12 |
| Comp. Ex.9 | 16 | 84 | | | | | 2.5 | | | 8 |
| Comp. Ex. 10 | 50 | 50 | | | | | 2.5 | | | 25 |
| Ref. Ex. | 24 | 76 | | | | | 2.5 | | | 12 |

**[Table 6]**

| | MVR (cm³/10 min) | Linear expansion coefficient . (cm/cm/°C) | Charpy impact strength (KG/m²) | Plating adhesion strength | | | Extensibility of copper sulfate plating (%) | Thermal cycle property | Thermal shock property |
|---|---|---|---|---|---|---|---|---|---|
| | | | | 65°C×15 min (KN/m) | 65°C× 7 min (KN/m) | 55°C×15 min (KH/m) | | | |
| Ex. 1 | 26 | 8.0 | 19 | 1.0 | 1.2 | - | 90 | B | C |
| Ex. 2 | 27 | 8.0 | 24 | 1.5 | 1.5 | 1.2 | 100 | A | B |
| Ex. 3 | 36 | 8.0 | 25 | 1.5 | 1.5 | 1.3 | 100 | A | B |
| Ex. 4 | 37 | 8.0 | 26 | 1.2 | 1.2 | - | 90 | B | C |
| Ex. 5 | 27 | 8.0 | 24 | 1.4 | 1.4 | - | 100 | A | B |
| Ex. 6 | 36 | 8.0 | 25 | 1.4 | 1.4 | - | 100 | A | B |
| Ex. 7 | 26 | 8.0 | 25 | 1.3 | 1.2 | - | 100 | B | B |
| Ex. 8 | 26 | 8.0 | 25 | 1.3 | 1.2 | - | 95 | B | B |
| Ex. 9 | 28 | 7.9 | 13 | 1.0 | 1.2 | - | 100 | B | B |
| Ex. 10 | 27 | 8.0 | 24 | 1.0 | 1.0 | - | 80 | B | C |
| Ex. 11 | 27 | 8.0 | 24 | 1.3 | 1.1 | - | 80 | B | B |
| Ex. 12 | 21 | 9.0 | 35 | 1.3 | 1.2 | - | 70 | B | C |
| Comp. Ex. 1 | 27 | 8.0 | 23 | 0.8 | 0.5 | - | 50 | D | E |
| Comp. Ex. 2 | 30 | 8.0 | 24 | 0.8 | 0.5 | - | 60 | D | E |
| Comp. Ex. 3 | 24 | 8.0 | 16 | 0.8 | 0.5 | 0.4 | 50 | D | E |
| Comp. Ex. 4 | 24 | 8.0 | 16 | 0.8 | 0.5 | - | 50 | D | E |
| Comp. Ex. 5 | 42 | 8.0 | 26 | 0.9 | 0.6 | - | 60 | B | D |
| Comp. Ex. 6 | 26 | 7.9 | 10 | 0.6 | 0.4 | - | 70 | D | E |
| Comp. Ex. 7 | 27 | 8.0 | 24 | 0.7 | 0.5 | - | 50 | B | D |
| Comp. Ex. 8 | 27 | 8.0 | 24 | 0.8 | 0.6 | - | 50 | D | E |
| Comp. Ex. 9 | 30 | 7.8 | 7 | 0.7 | 0.4 | - | 80 | D | E |
| Comp. Ex. 10 | 16 | 9.5 | 40 | 1.0 | 1.3 | - | 50 | D | E |
| Ref. Ex. | 27 | 8.0 | 24 | 1.5 | 1.2 | - | 50 | B | C |

As is apparent from Table 6, the resin compositions for plating use obtained in Examples 1 to 12 exhibited favorable levels ofMVR and linear expansion coefficient, indicating excellent moldability and low coefficient of linear expansion.
In addition, the molded articles that are obtained by molding the resin compositions for plating use obtained in Examples 1 to 12 exhibited a favorable level of Charpy impact strength, indicating excellent impact resistance.
Moreover, when a plating treatment was conducted on the obtained molded articles, all of the plating adhesion strength, extensibility of copper sulfate plating, thermal cycle property and thermal shock property exhibited excellent levels which were comparable to or superior than those of Reference Example.
It became clear that when using the resin compositions for plating use obtained in each Example, the duration of etching treatment with a permanganate solution can be shortened and the etching treatment temperature can be lowered in the plating treatment.

On the other hand, with regard to the resin compositions for plating use obtained in Comparative Examples 1 and 2, it was difficult to achieve the effects of etching treatment with a permanganate solution, and the amount of catalyst adsorption was readily reduced, since the antioxidant (C-3) having a melting point of 170°C was used. For this reason, the extensibility of copper sulfate plating was inferior as compared to those in Examples. In addition, when the molded articles were subjected to a plating treatment, the thermal cycle property and thermal shock property were inferior compared to those in each Example.
The resin compositions for plating use obtained in Comparative Examples 3, 4 and 6 exhibited low levels of Charpy impact strength for the molded articles compared to those in each Example, indicating inferior impact resistance, since the antioxidant (C) was either not added at all or the added amount thereof was as small as 0.5 parts. In addition, when the molded articles were subjected to a plating treatment, the plating adhesion strength, thermal cycle property and thermal shock property were inferior compared to those in each Example.
Since the amount of the antioxidant (C) added was as large as 10 parts in the resin composition for plating use obtained in Comparative Example 5, when the molded article was subjected to a plating treatment, the plating adhesion strength was readily reduced. Moreover, the thermal shock property was inferior compared to those in each Example.

With regard to the resin compositions for plating use obtained in Comparative Examples 7 and 8, it was difficult to achieve the effects of etching treatment with a permanganate solution, and the amount of catalyst adsorption was readily reduced, since the added amount of styrene (aromatic vinyl compound (b1)) that constituted the copolymer (B) was either too small or too large. For this reason, the extensibility of copper sulfate plating was inferior as compared to those in Examples. In addition, when the molded articles were subjected to a plating treatment, the thermal cycle property and thermal shock property were inferior compared to those in each Example.
With regard to the resin composition for plating use obtained in Comparative Example 9, since the proportion of the rubber-like polymer (d) was as low as 8%, relative to the combined total of the graft copolymer (A) and the copolymer (B) which accounts for 100% by mass, the Charpy impact strength for the molded article was low compared to those in each Example, indicating inferior impact resistance. In addition, when the molded article was subjected to a plating treatment, the plating adhesion strength, thermal cycle property and thermal shock property were inferior compared to those in each Example.
With regard to the resin composition for plating use obtained in Comparative Example 10, since the proportion of the rubber-like polymer (d) was as high as 25%, relative to the combined total of the graft copolymer (A) and the copolymer (B) which accounts for 100% by mass, although the Charpy impact strength for the molded article was high compared to those in each Example, the linear expansion coefficient showed a large value. Moreover, when the molded article was subjected to a plating treatment, although the level of plating adhesion strength was favorable, the thermal cycle property and thermal shock property were inferior compared to those in each Example.

### INDUSTRIAL AVILABILITY

The resin compositions for plating use of the present invention exhibit excellent levels of catalyst adsorption property, plating adhesion strength, moldability, impact resistance, and low coefficient of linear expansion, and are capable of yielding the molded articles that are suitable for the environmental load-reducing plating methods in which an etching treatment is conducted using a permanganate solution and plating is carried out through a direct plating method.

## Claims

1. A resin composition for plating use comprising:
a graft copolymer (A) formed by graft polymerizing 30 to 60 parts by mass of a monomer component (a) constituted of 60 to 80% by mass of an aromatic vinyl compound (a1), 20 to 40% by mass of a vinyl cyanide compound (a2) and 0 to 20% by mass of another monovinyl compound (a3) copolymerizable with the aromatic vinyl compound (a1) and the vinyl cyanide compound (a2), onto 40 to 70 parts by mass of a rubber-like polymer (d) constituted of a conjugated diene-based rubber (with the proviso that the combined total of the rubber-like polymer (d) and the monomer component (a) accounts for 100 parts by mass); and
a copolymer (B) formed by copolymerizing 50 to 80% by mass of an aromatic vinyl compound (b1), 20 to 50% by mass of a vinyl cyanide compound (b2) and 0 to 20% by mass of another monovinyl compound (b3) copolymerizable with the aromatic vinyl compound (b1) and the vinyl cyanide compound (b2),
wherein a proportion of the rubber-like polymer (d) is 10 to 20% by mass, relative to the combined total of the graft copolymer (A) and the copolymer (B) which accounts for 100% by mass, and also
1 to 8 parts by mass of an antioxidant (C) having a melting point of 25 to 100°C is added, relative to the combined total of the graft copolymer (A) and the copolymer (B) which accounts for 100 parts by mass.

2. The resin composition for plating use according to Claim 1,
wherein the antioxidant (C) is at least one kind of antioxidant selected from the group consisting of hindered phenol-based antioxidants, thioether-based antioxidants, phosphorus-based antioxidants and sulfur-based antioxidants.

3. A resin plated product being produced by conducting, on a molded article obtained by molding the resin composition for plating use of Claim 1 or 2, an etching treatment using a permanganate solution, and then a treatment using a Pd-Sn colloidal catalyst, followed by, without performing an accelerator treatment or an electroless plating treatment, a conversion treatment into conductors and an electroplating treatment.
